(19) Europäisches Patentamt / European Patent Office / Office européen des brevets

(11) **EP 3 680 113 B1**

## (12) EUROPÄISCHE PATENTSCHRIFT

(45) Veröffentlichungstag und Bekanntmachung des Hinweises auf die Patenterteilung:
**03.03.2021   Patentblatt 2021/09**

(21) Anmeldenummer: **19151498.3**

(22) Anmeldetag: **11.01.2019**

(51) Int Cl.:
*B60C 13/00* (2006.01)          *B29D 30/06* (2006.01)
*B29C 33/42* (2006.01)          *B23K 26/352* (2014.01)
*B23K 26/0622* (2014.01)          *B23K 26/00* (2014.01)
*B23K 26/064* (2014.01)          *B23K 26/066* (2014.01)
*B29D 30/72* (2006.01)          *B23K 103/00* (2006.01)

(54) **MARKIERUNG MIT STRUKTURELEMENTEN UNTERSCHIEDLICHER KONFIGURATION**

MARKING COMPRISING STRUCTURAL ELEMENTS OF DIFFERENT CONFIGURATIONS

MARQUAGE À L'AIDE D'ÉLÉMENTS STRUCTURAUX DE DIFFÉRENTE CONFIGURATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.07.2020   Patentblatt 2020/29**

(73) Patentinhaber: **Dahmen GmbH**
**52477 Alsdorf (DE)**

(72) Erfinder: **DAHMEN, Patrick**
**52080 Aachen (DE)**

(74) Vertreter: **Dilg, Haeusler, Schindelmann Patentanwaltsgesellschaft mbH Leonrodstraße 58 80636 München (DE)**

(56) Entgegenhaltungen:
**EP-A1- 0 650 824          WO-A1-2015/058874
US-A- 5 303 758          US-A1- 2013 152 943
US-A1- 2015 173 939**

**Beschreibung**

GEBIET DER ERFINDUNG

Die vorliegende Erfindung betrifft das Gebiet der Markierung von Gegenständen und insbesondere das Gebiet der Reifenmarkierungen.

HINTERGRUND

US 2016/0137008A1 offenbart eine Textur mit einer organisierten Anordnung einer Vielzahl von Elementen, wobei alle oder ein Teil der Elemente der Anordnung Wiederholungen eines einzigen Basiselement, zum Beispiel einer Faser oder einer Lamelle.

US 5303758 A offenbart einen Luftreifen mit einer Seitenwand, welche unterschiedlich geformte Strukturelemente aufweist.

WO 2015/058874 A1 offenbart eine Produktoberfläche aufweisend einen optoelektronisch lesbaren Code. Es wird angestrebt, den Code kostengünstig und auf einfache Art und Weise auf der Produktoberfläche anbringen zu können. Es wird als vorteilhaft beschrieben, wenn das Oberflächenprofil einer Zellenart Elemente aufweist, die eine Struktur und/oder eine Textur bilden. Hierbei umfasst der Begriff Struktur eine regelmäßige Anordnung von Elementen, während der Begriff Textur eine unregelmäßige aber weitgehend homogen erscheinende Verteilung von Elementen umfasst. Die Höhe der Erhebungen und/oder Vertiefungen des Oberflächenprofils sind in einem Graustufenbild durch 256 Graustufen dargestellt. Durch eine diskrete Höhenabstufung gemäß der diskreten Graustufenwerte weisen die Elemente der Oberflächenprofile eine Treppenstruktur auf. Das Oberflächenprofil ist durch eine quadratische Anordnung von quadratischen Pixeln erzeugt, wobei die Kantenlänge eines jeden Pixels in 0,04 mm beträgt und jedes Pixel eine konstante Höhe hat, wobei das als Graustufenbild dargestellte Oberflächenprofil eine Textur aufweist und wobei die Höhe der Pixel statistisch verteilt ist.

ZUSAMMENFASSUNG

Angesichts der oben beschriebenen Situation gibt es ein Bedürfnis für eine alternative Technik, welche durch Strukturierung einer Oberfläche eines Gegenstands einen hohen Kontrast erzeugt.

Diesem Bedürfnis wird durch die unabhängigen Patentansprüche Rechnung getragen. Vorteilhafte Ausführungsformen sind in den abhängigen Patentansprüchen angegeben.

Gemäß einem ersten Aspekt der hierin offenbarten Gegenstände wird ein Gegenstand, insbesondere in Form eines Luftreifens oder in Form einer Reifenform bereitgestellt.

Gemäß Ausführungsformen des ersten Aspektes wird ein Gegenstand, insbesondere in Form eines technischen Gummiartikels oder in Form einer technischen Gummivulkanisationsform bereitgestellt, der Gegenstand aufweisend: einen ersten Oberflächenabschnitt; einen zweiten Oberflächenabschnitt, welcher benachbart zu dem ersten Oberflächenabschnitt angeordnet ist; wobei der zweite Oberflächenabschnitt eine Vielzahl von Strukturelementen aufweist, wobei die Strukturelemente voneinander verschiedene Konfigurationen, insbesondere voneinander verschiedene Abmessungen, aufweisen.

Gemäß einem zweiten Aspekt der hierin offenbarten Gegenstände wird ein Verfahren bereitgestellt.

Gemäß Ausführungsformen des zweiten Aspektes wird ein Verfahren zum Herstellen einer Vielzahl von Strukturelementen mit unterschiedlichen Konfigurationen, insbesondere unterschiedlichen Abmessungen, in einem Oberflächenabschnitt eines Gegenstands bereitgestellt, das Verfahren aufweisend: Erstellen einer zweidimensionalen Intensitätsverteilung, welche Intensitätsbereiche unterschiedlicher Intensität aufweist; Erzeugen der Strukturelemente in dem Oberflächenabschnitt, wobei jeder Intensitätsbereich der zweidimensionalen Intensitätsverteilung einen Strukturbereich eines Strukturelements der Vielzahl von Strukturelementen repräsentiert und die Intensität jedes Intensitätsbereichs eine Höhe des betreffenden Strukturbereichs des Strukturelements definiert.

Die vorstehend definierten Aspekte und Ausführungsformen basieren auf der Idee, dass in der Oberfläche eines Gegenstands ein guter visueller Kontrast erzeugt werden kann durch eine Struktur, die eine Vielzahl von Strukturelementen mit unterschiedlichen Konfigurationen aufweist.

Gemäß Ausführungsformen des ersten Aspektes ist der Gegenstand eingerichtet zum Liefern der Funktionalität von einem oder mehreren der vorstehend genannten Ausführungsformen und/oder zum Liefern der Funktionalität, wie sie für eine oder mehrere der vorstehend und nachstehend genannten Ausführungsformen, insbesondere der Ausführungsformen des ersten Aspektes oder des zweiten Aspektes, erforderlich ist.

Gemäß Ausführungsformen des zweiten Aspektes ist das Verfahren eingerichtet zum Liefern der Funktionalität von einem oder mehreren der vorstehend genannten Ausführungsformen und/oder zum Liefern der Funktionalität, wie sie für eine oder mehrere der vorstehend und nachstehend genannten Ausführungsformen, insbesondere der Ausführungsformen des ersten Aspektes oder des zweiten Aspektes, erforderlich ist.

BESCHREIBUNG EXEMPLARISCHER AUSFÜHRUNGSFORMEN

Gemäß einer Ausführungsform weist ein Gegenstandeinen ersten Oberflächenabschnitt und einen zweiten Oberflächenabschnitt auf, wobei der zweite Oberflächenabschnitt benachbart zu dem ersten Oberflächenabschnitt angeordnet ist.

Gemäß einer Ausführungsform ist der Gegenstand ein Gummiartikel (beispielsweise ein technischer Gummiartikel). Gemäß einer weiteren Ausführungsform ist der Gegenstand eine Gummivulkanisationsform (beispielsweise eine technische Gummivulkanisationsform). Gemäß einer weiteren Ausführungsform ist der Gegenstand ein Luftreifen oder, gemäß anderer Ausführungsform, eine Reifenform.

Gemäß einer Ausführungsform weist ein Oberflächenabschnitt des Gegenstands, insbesondere der zweite Oberflächenabschnitt, eine Vielzahl von Strukturelementen auf, wobei die Strukturelemente voneinander verschiedene Konfigurationen aufweisen. Beispielsweise weisen die Strukturelemente gemäß einer Ausführungsform voneinander verschiedene Abmessungen auf.

Gemäß einer Ausführungsform weisen die Strukturelemente der Vielzahl von Strukturelementen insbesondere in einem Endbereich der Strukturelemente voneinander verschiedene Konfigurationen gemäß Ausführungsformen der hierin offenbarten Gegenstände auf. Gemäß einer Ausführungsform umfasst der Endbereich eines Strukturelementes eine Stirnfläche des Strukturelements sowie eine hieran angrenzende (seitliche) Wandung, d.h. einen Wandungsendabschnitt, des Strukturelements. Gemäß einer weiteren Ausführungsform umfasst der Endbereich eines Strukturelements die Stirnfläche des Strukturelements sowie einen hieran angrenzenden Wandungsendabschnitt. Gemäß einer weiteren Ausführungsform erstreckt sich der stufenfreie Wandungsendabschnitt in Umfangsrichtung über den gesamten Umfang des Strukturelements erstreckt. Mit anderen Worten ist der Wandungsendabschnitt in Umfangsrichtung ringförmig geschlossen. Gemäß einer Ausführungsform ist der Wandungsendabschnitt in seiner Längsrichtung frei von Stufen (in diesem Fall wird der Wandungsendabschnitt auch als stufenfreier Wandungsendabschnitt bezeichnet). Gemäß einer Ausführungsform erstreckt sich der stufenfreie Wandungsendabschnitt von der Stirnfläche bis zu einer Stufe oder bis zu einer Basis des Strukturelements.

Gemäß einer Ausführungsform umfassen die voneinander verschiedenen Konfigurationen der Strukturelemente verschiedene Höhen bezüglich des ersten Oberflächenabschnitts. Mit anderen Worten weist jedes Strukturelement eine Höhe bezüglich des ersten Oberflächenabschnitts auf, wobei die Höhen der Strukturelemente voneinander verschieden sind. Die Höhe eines Strukturelements kann positiv oder negativ sein, wobei eine positive Höhe einem über den ersten Oberflächenabschnitt vorstehenden Strukturelement entspricht und eine negative Höhe einem gegenüber dem ersten Oberflächenabschnitt vertieften Strukturelement entspricht.

Gemäß einer Ausführungsform ist die Höhe eines Strukturelements der Abstand einer Stirnfläche des Strukturelements von dem unbearbeiteten Oberflächenabschnitt. Gemäß einer Ausführungsform weist jedes Strukturelement einen oder mehrere Strukturbereiche auf. Beispielsweise entspricht bei einer Herstellung eines Strukturbereichs durch Abtrag von Material in einem Oberflächenabschnitt (beispielsweise dem zweiten Oberflächenabschnitt) die Höhe des Strukturbereichs der Abtragstiefe in dem Oberflächenabschnitt.

Gemäß einer Ausführungsform umfassen die voneinander verschiedenen Konfigurationen der Strukturelemente voneinander verschiedene äußere Konturen der Strukturelemente. Beispielsweise weist gemäß einer Ausführungsform jedes Strukturelement in einer Umfangsrichtung (beispielsweise einer Umfangsrichtung senkrecht zu einer Längserstreckung des Strukturelements, insbesondere einer Umfangsrichtung in einer Ebene parallel zu dem ersten Oberflächenabschnitt) eine äußere Kontur auf, wobei die äußere Kontur unter den Strukturelementen voneinander verschieden ist. Beispielsweise ist gemäß einer Ausführungsform die äußere Kontur eines Strukturelements unregelmäßig geformt. Beispielsweise weicht gemäß einer Ausführungsform die äußere Kontur eines Strukturelements (oder der Vielzahl von Strukturelementen) von einer Kreisform oder einer rechteckigen Form ab.

Die Verschiedenheit der äußeren Konturen kann sich beispielsweise auf den Verlauf der äußeren Kontur in einer Längsrichtung des Strukturelements (d. h. einer Querschnittsänderung in der Längsrichtung) und/oder auf die allgemeine Form der Konturen der Umfangsrichtung beziehen. Gemäß einer Ausführungsform ist die Längsrichtung gleich der Längsrichtung entlang der Höhe des Strukturelements und hierin werden die Begriffe "in Längsrichtung" "über die Höhe" und "entlang der Höhe" synonym verwendet. Gemäß einer Ausführungsform ist die Längsrichtung eines Strukturelements definiert als eine Richtung senkrecht zu der unbearbeiteten Oberfläche (vor der Erzeugung des Strukturelements) am Ort des Strukturelements. Beispielsweise ist bei einem Reifen die Längsrichtung eines Strukturelements definiert als eine Richtung senkrecht zur Reifenoberfläche am Ort des Strukturelements nach der Erzeugung des Strukturelements kann diese Richtung beispielsweise durch Interpolation auf Basis des ersten Oberflächenabschnitts ermittelt werden. Gemäß einer Ausführungsform ist der erste Oberflächenabschnitt des Gegenstands unbearbeitet (weist insbesondere kein Strukturelement auf).

Die Strukturelemente definieren gemäß einer Ausführungsform eine Querschnittsfläche und einen Flächeninhalt der Querschnittsfläche (Querschnittsflächeninhalt) entlang der Längsrichtung (bzw. entlang der Höhe) des Strukturelements. Gemäß einer Ausführungsform erfassen die voneinander verschiedenen Konfigurationen der Strukturelemente voneinander verschiedene mittlere Querschnittsflächeninhalte der Strukturelemente, wobei der mittlere Querschnittsflächeninhalt eines Strukturelements über die Höhe des Strukturelements gemittelt ist. Gemäß einer Ausführungsform weisen die Strukturelemente über ihre Höhe, d. h. entlang der Längsrichtung, zumindest abschnittsweise jeweils einen im Wesentlichen konstanten Querschnittsflächeninhalt auf. Beispielsweise sind die Strukturelemente gemäß einer Ausführungsform zumindest abschnittsweise (in einer Längsrichtung des betreffenden Strukturelements) säulenartig ausgebildet. Gemäß einer Ausführungsform umfasst die Vielzahl von Strukturelementen untereinander verbundene Säulen, insbesondere geometrisch undefinierte Säulen, die zusammen eine geometrisch undefinierte (ungeometrische) Oberflächenstruktur ergeben. "Geometrisch Undefiniert" oder "ungeometerisch" bezeichnet hierbei eine Form die von einer geometrischen Form (Kreis, Quadrat, Rechteck, Trapez, etc.) abweicht. Gemäß einer weiteren Ausführungsform weist mindestens eines der Strukturelemente eine Mehrzahl (zwei oder mehr) von Strukturbereichen auf. Gemäß einer weiteren Ausführungsform ist jeder der Strukturbereiche säulenartig ausgebildet.

Gemäß einer Ausführungsform weist jedes Strukturelement eine Stirnfläche auf, welche eine mittlere Flächennormale definiert. Beispielsweise kann die mittlere Flächennormale gemäß einer Ausführungsform berechnet werden durch Anfitten (d. h. durch Parameteranpassung) einer Ebenengleichung an die Stirnfläche, beispielsweise mit der Methode der kleinsten Quadrate. Die auf diese Weise erhaltene Ebene definiert in eindeutiger Weise eine Flächennormale der Ebene, die der mittleren Flächennormalen der Stirnfläche entspricht. Gemäß einer Ausführungsform umfassen die voneinander verschiedenen Konfigurationen der Strukturelemente verschiedene Richtungen der mittleren Flächennormalen der Strukturelemente.

Gemäß einer Ausführungsform weisen die Strukturelemente (beispielsweise die Wandungsendabschnitte der Strukturelemente, insbesondere die stufenfreien Wandungsendabschnitte der Strukturelemente), gemittelt über die Vielzahl von Strukturelementen, einen mittleren Durchmesser in einem Bereich zwischen 0,01 mm und 0,2 mm auf, insbesondere in einem Bereich zwischen 0,05 mm und 0,1 mm. Gemäß einer Ausführungsform ist der mittlere Durchmesser eines einzelnen Strukturelements gegeben durch Mittelung des Durchmessers des Strukturelements über den gesamten Winkelbereich (360 Grad) als auch über die Länge des Strukturelements oder, in einer anderen Ausführungsform, über die Länge des (stufenfreien) Wandungsendabschnitts. Gemäß einer Ausführungsform ist der mittlere Durchmesser eines einzelnen Strukturelements in einem Bereich zwischen 0,01 mm und 0,2 mm.

Gemäß einer weiteren Ausführungsform weisen die Strukturelemente (beispielsweise die Wandungsendabschnitte der Strukturelemente, insbesondere die stufenfreien Wandungsendabschnitte der Strukturelemente), gemittelt über die Vielzahl von Strukturelementen, eine mittlere Höhe in einem Bereich zwischen 0,01 mm und 0,4 mm auf, insbesondere in einem Bereich zwischen 0,05 mm und 0,3 mm.

Gemäß einer Ausführungsform bildet der zweite Oberflächenabschnitt eine Markierung, welche einen visuellen Kontrast zu dem ersten Oberflächenabschnitt aufweist. Insbesondere ist gemäß einer Ausführungsform eine Reflektivität des ersten Oberflächenabschnitts größer als eine Reflektivität des zweiten Oberflächenabschnitt. Mit anderen Worten erscheint der zweite Oberflächenabschnitt gemäß einer Ausführungsform dunkler als der erste Oberflächenabschnitt. Ohne auf eine Theorie beschränkt zu sein, ist dies vermutlich darauf zurückzuführen, dass die Vielzahl von Strukturelementen zu mehrfacher Reflexion des einfallenden Lichts führt und somit die Absorption des einfallenden Lichts erhöht ist.

Gemäß einer Ausführungsform weist ein Verfahren zum Herstellen einer Vielzahl von Strukturelementen mit unterschiedlichen Konfigurationen ein Erstellen einer zweidimensionalen Intensitätsverteilung auf, wobei die zweidimensionale Intensitätsverteilung Intensitätsbereiche unterschiedlicher Intensität aufweist. Ferner umfasst das Verfahren gemäß einer Ausführungsform ein Erzeugen der Strukturelemente auf Basis der zweidimensionalen Intensitätsverteilung, wobei jeder Intensitätsbereich der zweidimensionalen Intensitätsverteilung einen Strukturbereich eines Strukturelements der Vielzahl von Strukturelementen repräsentiert. Gemäß einer weiteren Ausführungsform definiert die Intensität jedes Intensitätsbereichs eine Höhe des betreffenden (zugeordneten) Strukturbereichs. Ein Strukturelement der Vielzahl von Strukturelementen kann hierbei einen einzigen Strukturbereich oder zwei oder mehr Strukturbereiche aufweisen. Im Allgemeinen umfasst somit ein Strukturelement mindestens einen Strukturbereich dessen Höhe durch die Intensität des zugeordneten Intensitätsbereichs definiert ist.

Gemäß einer Ausführungsform entsprechen die Intensitäten der Intensitätsbereiche einem Gauß'schen Rauschen. Die zweidimensionale Intensitätsverteilung kann beispielsweise analog (beispielsweise ähnlich dem Rauschen eines analogen Röhrenfernsehers bei fehlendem Eingangssignal) oder digital erzeugt werden. Gemäß einer Ausführungsform wird jedem Intensitätsbereich ein zufällig ausgewählter Intensitätswert zugeordnet, wobei gemäß einer weiteren Ausführungsform die Intensitäten über alle Intensitätsbereiche Gauß-verteilt sind. Gemäß einer weiteren Ausführungsform gibt es eine diskrete Anzahl von verschiedenen Intensitätswerten, beispielsweise 256 oder 1024 Intensitätswerte.

Gemäß einer Ausführungsform wird die zweidimensionale Intensitätsverteilung erzeugt durch Erstellen eines Bildes mit einer konstanten Färbung und Addieren eines Rauschterms zu dem Bild (beispielsweise Addieren von Gauß'schem Rauschen zu dem Bild) wodurch ein modifiziertes Bild erhalten wird, und wobei das modifizierte Bild die zweidimensionale Intensitätsverteilung repräsentiert.

Gemäß einer Ausführungsform bedeutet eine "konstante Färbung" eine konstante Färbung über das gesamte Bild. Gemäß einer Ausführungsform umfasst die konstante Färbung eine konstante Intensität über das gesamte Bild. Gemäß einer weiteren Ausführungsform ist das Bild ein Graustufenbild und die konstante Färbung bedeutet, dass das gesamte Bild eine einzige Graustufe aufweist.

Gemäß anderer Ausführungsform weist das (unmodifizierte) Bild keine konstante Färbung auf, sondern vielmehr ein schmales Farbspektrum (oder Intensitätsspektrum), wobei auch hier die zweidimensionale Intensitätsverteilung erhalten wird, indem Gauß'sches Rauschen zu dem unmodifizierten Bild addiert wird. Beispielsweise weist das unmodifizierte Bild gemäß einer Ausführungsform eine Anzahl von verschiedenen Farben auf, insbesondere eine Anzahl von verschiedenen Farben, die in dem verwendeten Farbraum des Bildes nebeneinander liegen. Die Anzahl von verschiedenen Farben kann beispielsweise zehn, fünf oder drei betragen. Beispielsweise kann die Anzahl von verschiedenen Farben zwischen zwei und zehn liegen.

Gemäß anderer Ausführungsform kann an Stelle von Gauß'schem Rauschen ein anderer Rauschterm (beispielsweise rosa Rauschen) oder eine (beliebige) andere Funktion (z. B. eine andere Zufallsfunktion) zur Erzeugung von Intensitätsbereichen gemäß Ausführungsformen der hierin offenbarten Gegenstände verwendet werden.

Gemäß einer Ausführungsform umfasst das Erzeugen der Strukturelemente ein Abtragen des Gegenstands im Bereich des Oberflächenabschnitts. Insbesondere definiert der Abtrag für jeden Strukturbereich die Höhe des (betreffenden) Strukturbereichs. Gemäß einer Ausführungsform ist die Höhe eines Strukturbereichs der Abstand (beispielsweise der mittlere Abstand) einer Stirnfläche des Strukturbereichs von dem unbearbeiteten Oberflächenabschnitt. Beispielsweise entspricht bei einer Herstellung des Strukturbereichs durch Abtrag von Material in dem Oberflächenabschnitt die Höhe der Abtragstiefe in dem Oberflächenabschnitt.

Gemäß einer weiteren Ausführungsform wird das Abtragen des Gegenstands durch Laserbearbeitung durchgeführt. Gemäß einer Ausführungsform wird für die Laserbearbeitung eine Laserquelle (bzw. ein Laser) mit einer Wellenlänge im Bereich zwischen 800 nm und 1200 nm, insbesondere mit einer Wellenlänge von 1064 nm verwendet.

Gemäß einer Ausführungsform ist der Laser ein gepulster Laser. Entsprechend wird gemäß einer Ausführungsform für mindestens einen Teil der Strukturbereiche das Abtragen durch einen einzigen Laserpuls oder durch eine Mehrzahl von Laserpulsen an einer Stelle durchgeführt, beispielsweise zwei oder mehr Laserpulse. Beispielsweise kann gemäß einer Ausführungsform vorgesehen sein, dass für mindestens einen Teil der Strukturbereiche das Abtragen durch eine Anzahl von Laserpulsen erfolgt, wobei die Anzahl zwischen 2 und 5000 liegt. Insbesondere bei sehr kurzen Pulsen erfolgt der Abtrag mit einer sehr hohen Flankensteilheit so dass sich (zumindest abschnittsweise) säulenförmige Strukturelemente ergeben.

Gemäß einer Ausführungsform ist jeder Strukturbereich definiert durch die räumliche Ausdehnung eines Laserpulses. Mit anderen Worten entspricht ein Strukturbereich derjenigen Fläche, die durch einen Laserpuls bearbeitet wird.

Im Folgenden werden exemplarische Ausführungsformen der hierin offenbarten Gegenstände beschrieben, wobei beispielsweise auf ein Verfahren zum Herstellen einer Vielzahl von Strukturelementen und einen Gegenstand, welcher eine Vielzahl von Strukturelementen aufweist Bezug genommen wird. Es sollte hervorgehoben werden, dass natürlich jede Kombination von Merkmalen verschiedener Aspekte, Ausführungsformen und Beispiele möglich ist. Insbesondere werden einige Ausführungsformen mit Bezug auf ein Verfahren beschrieben, während andere Ausführungsformen mit Bezug auf eine Vorrichtung beschrieben werden. Jedoch wird der Fachmann der vorstehenden und der nachfolgenden Beschreibung, den Ansprüche und den Zeichnungen entnehmen, dass, solange es nicht anders angegeben ist, Merkmale verschiedener Aspekte, Ausführungsformen und Beispiele kombinierbar sind und solche Kombinationen von Merkmalen als durch diese Anmeldung offenbart anzusehen sind. Beispielsweise ist selbst ein Merkmal, welches sich auf ein Verfahren bezieht, mit einem Merkmal kombinierbar, welches sich auf eine Vorrichtung bezieht, und umgekehrt.

Weitere Vorteile und Merkmale der vorliegenden Erfindung ergeben sich aus der folgenden beispielhaften Beschreibung derzeit bevorzugter Ausführungsformen, auf welche die Erfindung jedoch nicht beschränkt ist. Die einzelnen Figuren der Zeichnungen dieser Anmeldung sind lediglich als schematisch und als nicht maßstabsgetreu anzusehen.

KURZE BESCHREIBUNG DER ZEICHNUNGEN

Fig. 1 zeigt einen Gegenstand in Form einer Reifenform 100 gemäß Ausführungsformen der hierin offenbarten Gegenstände.

Fig. 2 zeigt einen Teil der Oberflächenstruktur aus Fig. 1 in vergrößerter Darstellung zur Veranschaulichung von weiteren Ausführungsformen der hierin offenbarten Gegenstände.

Fig. 3 zeigt schematisch einen Teil eines Reifens 140, der in der Reifenform 100 aus Fig. 1 abgeformt wurde.

Fig. 4 zeigt eine Mikroskopaufnahme von einem Teil eines (zweiten) Oberflächenabschnitts 104 eines Gegenstands gemäß Ausführungsformen der hierin offenbarten Gegenstände.

Fig. 5 veranschaulicht ein Verfahren zur Herstellung der Vielzahl von Strukturelementen gemäß Ausführungsformen der hierin offenbarten Gegenstände.

Fig. 6 veranschaulicht ein Verfahren zur Herstellung einer zweidimensionalen Intensitätsverteilung 150 gemäß Ausführungsformen der hierin offenbarten Gegenstände.

## DETAILLIERTE BESCHREIBUNG

Es wird angemerkt, dass in verschiedenen Figuren ähnliche oder identische Elemente oder Komponenten mit denselben Bezugszahlen versehen sind, oder mit Bezugszahlen, die sich nur in der ersten Ziffer unterscheiden. Solche Merkmale bzw. Komponenten, die mit den entsprechenden Merkmalen bzw. Komponenten in einer anderen Figur im Sinne dieser Offenbarung gleich oder zumindest funktionsgleich sind, werden nur bei ihrem ersten Auftreten in dem nachfolgenden Text detailliert beschrieben und die Beschreibung wird bei nachfolgendem Auftreten dieser Merkmale und Komponenten (bzw. der entsprechenden Bezugszahlen) nicht wiederholt.

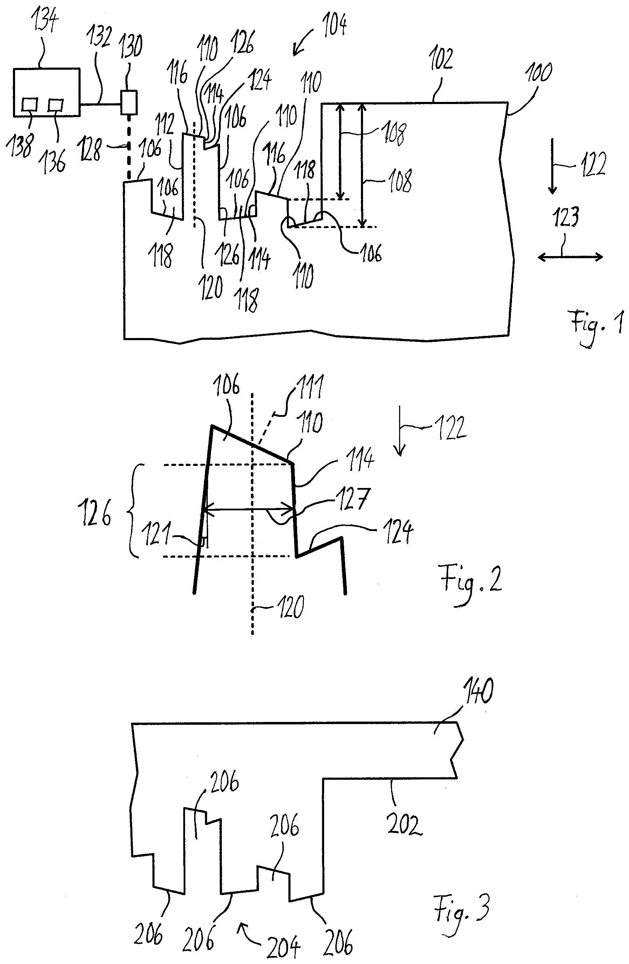

Fig. 1 zeigt einen Gegenstand in Form einer Reifenform 100 gemäß Ausführungsformen der hierin offenbarten Gegenstände.

Die Reifenform 100 weist einen ersten, unbearbeiteten Oberflächenabschnitt 102 und einen zweiten Oberflächenabschnitt 104 mit einer Oberflächenstruktur auf. Der zweite Oberflächenabschnitt bzw. die Oberflächenstruktur weist eine Vielzahl von Strukturelementen gemäß Ausführungsformen der hierin offenbarten Gegenstände auf, von denen einige in Fig. 1 mit 106 bezeichnet sind.

Gemäß einer Ausführungsform ist mindestens eines der Strukturelemente 106 ein Vorsprung. Gemäß einer weiteren Ausführungsform ist mindestens eines der Strukturelemente 106 eine Vertiefung. Gemäß einer weiteren Ausführungsform sind die Strukturelemente der Vielzahl von Strukturelementen ausschließlich Vorsprünge oder ausschließlich Vertiefungen oder, in einer nochmals weiteren Ausführungsform teilweise Vorsprünge und teilweise Vertiefungen.

Gemäß einer Ausführungsform weisen die Strukturelemente 106 verschiedene Konfigurationen und insbesondere verschiedene Abmessungen auf. Insbesondere weisen gemäß einer Ausführungsform die Strukturelemente verschiedene Höhen (vertikale Abstände) 108 bezüglich des ersten Oberflächenabschnitts 102 auf. Allgemein und insbesondere wenn eine Stirnfläche 110 eines Strukturelements 106 sich schräg (d.h. nicht-parallel) zu dem ersten Oberflächenabschnitt 102 (oder alternativ, gemäß einer anderen Ausführungsform schräg zu einer Querrichtung 123, die senkrecht auf einer Längsrichtung 122 des Strukturelements ist) erstreckt, ist gemäß einer Ausführungsform die Höhe 108 des Strukturelements 106 bezüglich des ersten Oberflächenabschnitts 102 definiert als der maximale Abstand der Stirnfläche 110 von dem ersten Oberflächenabschnitts 102 in der Längsrichtung 122 des Strukturelements 106. In Fig. 1 ist die Höhe 108 für zwei exemplarisch ausgewählte Strukturelemente 106, einen Vorsprung 116 und eine Vertiefung 118, angegeben. Gemäß einer Ausführungsform definiert die Stirnfläche 110 eine mittlere Flächennormale 111.

Gemäß einer Ausführungsform weist die Vielzahl von Strukturelementen 106, gemittelt über alle Strukturelemente 106, eine mittlere Höhe in einem Bereich zwischen 0,01 mm und 0,4 mm auf.

Gemäß einer Ausführungsform weist jedes Strukturelement 106 eine seitliche Wandung 112 mit einem Wandungsabschnitt 114 auf, der sich in Umfangsrichtung über den gesamten Umfang des Strukturelements erstreckt. Mit anderen Worten ist der Wandungsabschnitt 114 in Umfangsrichtung ringförmig geschlossen. Der Wandungsabschnitt 114 ist gemäß einer Ausführungsform der Wandungsabschnitt eines Vorsprungs 116 oder, gemäß einer weiteren Ausführungsform, der Wandungsabschnitt einer Vertiefung 118, beispielsweise wie in Fig. 1 dargestellt. Gemäß einer Ausführungsform ist der Wandungsabschnitt 114 in einem Endbereich des Strukturelements 106 angeordnet und bildet einen Wandungsendabschnitt 126.

Gemäß einer Ausführungsform definiert jeder Wandungsabschnitt 114 eine Mittellinie 120, die beispielsweise durch lineare Regression (insbesondere Anpassen von Parametern einer Geradengleichung an den Wandungsabschnitt 114 mit der Methode der kleinsten Quadrate) ermittelt werden kann. Gemäß einer weiteren Ausführungsform ist die Längsrichtung des Strukturelements 106 durch die Mittellinie 120 definiert (d. h. die Mittellinie gibt die Längsrichtung 122 an). Gemäß einer Ausführungsform wird die Höhe 108 des Strukturelements 106 in der Längsrichtung 122 des Strukturelements 106 bestimmt. In diesem Fall definiert der Wandungsabschnitt 114 die Richtung längs der Höhe 108 des Strukturelements 106.

Es versteht sich, dass eine Oberflächenstruktur in dem zweiten Oberflächenabschnitt 104 noch weitere Elemente aufweisen kann, die nicht die Merkmale von hierein beschriebenen Strukturelementen aufweisen.

Gemäß einer Ausführungsform weist die seitliche Wandung 112 von zumindest einem Teil der Strukturelemente 106 mindestens eine Stufe 124 auf, über welche sich der Querschnittsflächeninhalt des Strukturelements 106 relativ stark (beispielsweise diskontinuierlich) ändert. Beispielsweise wird gemäß einer Ausführungsform eine Änderung des Querschnittsflächeninhalts als stufenförmig (oder diskontinuierlich) betrachtet, wenn sich die seitliche Wandung 112 über eine Höhe von einer Längeneinheit über mehr als 0,1 Längeneinheiten senkrecht zu der Längsrichtung 122 (d. h. senkrecht zu der Höhe, z. B. in der Querrichtung 123) erstreckt. Die Stufen können sich über den gesamten Umfang oder einen Teil des Umfangs des Strukturelements 106 erstrecken.

Ferner veranschaulicht Fig. 1 ein Verfahren zum Herstellen einer Oberflächenstruktur mit einer Vielzahl von Strukturelementen 106 mit unterschiedlichen Konfigurationen, insbesondere unterschiedlichen Abmessungen, in dem zweiten Oberflächenabschnitt 104. Gemäß einer Ausführungsform umfasst das Verfahren ein Erzeugen der Strukturelemente 106 in dem (zweiten) Oberflächenabschnitt 104, wobei jedes Strukturelement 106 mindestens einen Bereich (hierin auch als Strukturbereich bezeichnet) umfasst und wobei jeder Strukturbereich erzeugt ist durch Abtragen von Material des Gegenstands 100 mit einem Laserstrahl 128.

Gemäß einer Ausführungsform wird der Laserstrahl 128 von einer Laserquelle 130 erzeugt, die wiederum durch Steuersignale, angegeben bei 132, von einer Steuervorrichtung 134 gesteuert wird. Gemäß einer Ausführungsform weist die Steuervorrichtung 134 einen Speicher 136 zum Speichern eines Programmelementes auf, sowie eine Prozessorvorrichtung 138 zum Ausführen des Programmelementes. Gemäß einer Ausführungsform ist das Programmelement eingerichtet, um, wenn es auf der Prozessorvorrichtung 138 ausgeführt wird, die Ausführung eines Verfahrens gemäß einem oder mehreren Ausführungsformen der hierin offenbarten Gegenstände zu bewirken.

Fig. 2 zeigt schematisch einen Teil einer Oberflächenstruktur in vergrößerter Darstellung zur Veranschaulichung von weiteren Ausführungsformen der hierin offenbarten Gegenstände.

Gemäß einer Ausführungsform schließt der Wandungsabschnitt 114 mit der Mittellinie 120 über den gesamten Umfang einen Winkel 121 ein, der in einem Intervall zwischen ± 5 Grad (insbesondere zwischen ± 3 Grad) liegt. Gemäß einer weiteren Ausführungsform liegt der Winkel 121 in einem Intervall zwischen -3 Grad und +5 Grad, beispielsweise zwischen 0 Grad und +5 Grad. Der Winkel kann in einer Längsposition über den gesamten Umfang des Wandungsabschnitts 114 konstant sein oder über den Umfang variieren, beispielsweise innerhalb einem der angegebenen Intervalle.

Gemäß einer Ausführungsform ist der Wandungsabschnitt 114 ein Wandungsendabschnitt 126, welcher sich (zumindest teilweise) von der Stirnfläche 110 des Strukturelements 106 weg erstreckt. Gemäß einer Ausführungsform erstreckt sich der Wandungsendabschnitt 126 von der Stirnfläche 110 bis zu einer Stufe 124 des Strukturelements 106.

Gemäß einer Ausführungsform weisen die Strukturelemente 106 in ihrem Wandungsendabschnitt 126 voneinander verschiedene mittlere Querschnittsflächeninhalte auf, die jeweils über die Längserstreckung (in der Längsrichtung 122 des betreffenden Strukturelements) des Wandungsendabschnitts 126 gemittelt sind, wobei gemäß einer Ausführungsform der Querschnittsflächeninhalt in einer Ebene ermittelt wird, die senkrecht auf der Längsrichtung 122 des Strukturelements 106 steht. Mit anderen Worten wird gemäß einer Ausführungsform der Querschnittsflächeninhalt in einer Ebene ermittelt, die senkrecht auf der Mittellinie 120 (senkrecht zur Zeichenebene der Fig. 2) steht.

Dem mittleren Querschnittsflächeninhalt A_WEA des Wandungsendabschnitts 126 eines Strukturelements 106 entspricht ein mittlerer Durchmesser eines Kreises mit demselben Flächeninhalt (d_WEA, hierin auch als mittlerer Durchmesser 127 des Wandungsendabschnitts 126 bezeichnet) gemäß

$$A\_WEA = (d\_WEA/2)^2 * Pi,$$

wobei

D_WEA/2 der halbe mittlere Durchmesser D_WEA des Wandungsendabschnitts 126 ist; ^2 das Quadrat des vorangestellten Argumentes bezeichnet; und Pi die Kreiszahl ist (Pi ≈ 3,1415).

Gemäß einer Ausführungsform weist die Vielzahl von Strukturelementen, gemittelt über alle Strukturelemente, einen mittleren Durchmesser D_WEA des Wandungsendabschnitts in einem Bereich zwischen 0,01 mm und 0,2 mm auf.

Fig. 3 zeigt schematisch einen Teil eines Reifens 140, der in der Reifenform 100 aus Fig. 1 abgeformt wurde.

Entsprechend weist auch der Reifen 140 einen ersten Oberflächenabschnitt 202 auf und einen zweiten Oberflächenabschnitt 204 mit einer Vielzahl von Strukturelementen 206 gemäß Ausführungsformen der hierin offenbarten Gegenstände. Durch das Abformen ist gemäß einer Ausführungsform jedes Strukturelement 206 des Reifens 140 ein Komplement des entsprechenden Strukturelements 106 der Reifenform 100. Mit anderen Worten entspricht einem Strukturelement 106 in Form eines Vorsprungs der Reifenform 100 (siehe Fig. 1) ein Strukturelement 206 in Form einer Vertiefung des Reifens, und umgekehrt.

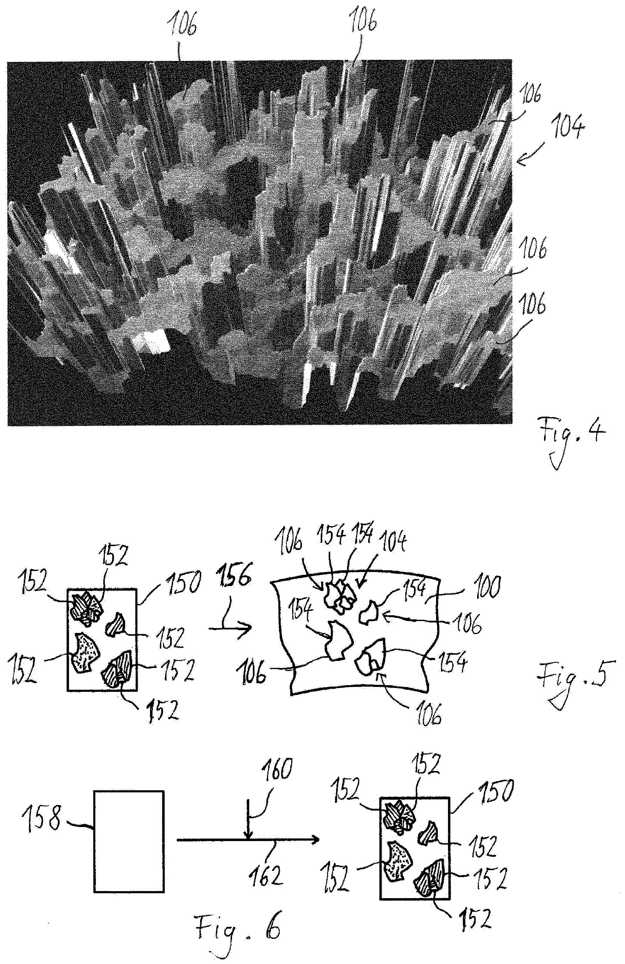

Fig. 4 zeigt eine Mikroskopaufnahme von einem Teil eines (zweiten) Oberflächenabschnitts 104 eines Gegenstands gemäß Ausführungsformen der hierin offenbarten Gegenstände.

Gemäß Ausführungsformen der hierin offenbarten Gegenstände, weist der zweite Oberflächenabschnitt 104 eine Vielzahl von Strukturelementen auf, von denen in Fig. 4 einige exemplarisch mit der Bezugszahlen 106 markiert sind.

Fig. 5 veranschaulicht ein Verfahren zur Herstellung der Vielzahl von Strukturelementen gemäß Ausführungsformen der hierin offenbarten Gegenstände.

Gemäß einer Ausführungsform wird die Vielzahl von Strukturelementen erzeugt, indem zunächst eine zweidimensionale Intensitätsverteilung 150 erstellt wird, beispielsweise in Form eines zweidimensionalen Graustufenbildes. Die zweidimensionale Intensitätsverteilung 150 weist Intensitätsbereiche 152 unterschiedlicher Intensität auf. In dem Beispiel eines zweidimensionalen Graustufenbildes entsprechen die unterschiedlichen Intensitäten unterschiedlichen Grauwerten, die in Fig. 5 durch unterschiedliche Schraffuren dargestellt sind.

Gemäß einer Ausführungsform werden die Strukturelemente in einem zweiten Oberflächenabschnitt 104 einer Reifenform 100 durch Laserbearbeitung erzeugt, wobei jeder Intensitätsbereich 152 der Intensitätsverteilung 150 einen Strukturbereich 154 repräsentiert, wobei jedes Strukturelement 106 mindestens einen der Strukturbereiche 154 aufweist. In Fig. 5 sind die Strukturelemente 106 mit Abstand voneinander dargestellt. Es versteht sich jedoch, dass gemäß anderer Ausführungsform zumindest einige der Strukturelemente 106 unmittelbar aneinander angrenzen können. Gemäß einer Ausführungsform definiert die Intensität von jedem der Intensitätsbereiche 152 eine Höhe des entsprechenden Strukturbereichs 154. Nachdem Fig. 5 eine Draufsicht auf die Strukturbereiche/Strukturelemente ist, ist die Höhe der Strukturbereiche 154 / Strukturelemente 106 in Fig. 5 nicht sichtbar.

Gemäß einer Ausführungsform ist die zweidimensionale Intensitätsverteilung 150 eine Eingabe für eine Laserbearbeitungsvorrichtung und die Strukturbereiche 154 bzw. die Vielzahl von Strukturelementen 106 auf dem Gegenstand ein Ergebnis der entsprechenden Lasergravur des Gegenstands (z.B. der Reifenform 100). Diese Umsetzung der zweidimensionalen Intensitätsverteilung 150 in die Vielzahl von Strukturelementen 106 auf dem Gegenstand bzw. der Reifenform 100 ist in Fig. 5 schematisch durch den Pfeil bei 156 angegeben.

Fig. 6 veranschaulicht ein Verfahren zur Herstellung einer zweidimensionalen Intensitätsverteilung 150 gemäß Ausführungsformen der hierin offenbarten Gegenstände.

Gemäß einer Ausführungsform geht das Verfahren von einem Bild 158 mit einer konstanten Färbung, Beispiel einem konstanten Grauwert, wie beispielsweise weiß oder schwarz aus, beispielsweise weiß wie in Fig. 6 dargestellt.

Gemäß einer Ausführungsform wird zu diesem Bild eine Zufallsfunktion addiert, welche jedem Bildpunkt des Bildes 158 einen Zufallswert hinzufügt, so dass der Intensitätswert des Bildpunktes innerhalb eines gewünschten Intensitätsintervalls liegt, beispielsweise zwischen schwarz und weiß liegt. Gemäß einer Ausführungsform sind die Zufallswerte Gauß-verteilt und die Zufallsfunktion ist ein Gauß'sches Rauschen, in Fig. 6 angegeben bei 160. Die Abbildung, welche jedem Bildpunkt des Bildes 158 den Zufallswert hinzufügt, um die zweidimensionale Intensitätsverteilung 150 mit den Intensitätsbereichen 152 zu erhalten, ist in Fig. 6 bei 162 angegeben.

Gemäß einer anderen Ausführungsform wird die zweidimensionale Intensitätsverteilung 150 manuell erzeugt oder manuell nachbearbeitet.

Gemäß einer Ausführungsform Form ist das Bild 158 und die daraus erzeugte Intensitätsverteilung jeweils ein analoges Bild. Gemäß einer weiteren Ausführungsform ist die zweidimensionale Intensitätsverteilung 150 ein digitales Bild mit einer definierten Anzahl von Zeilen und Spalten, wobei jeder Bildpunkt (Pixel), welcher durch eine eindeutige Kombination von Zeile und Spalte definiert ist, einen einzigen Intensitätswert annehmen kann, beispielsweise einen Intensitätswert zwischen 0 und 255. In diesem Sinne definiert gemäß einer Ausführungsform die Auflösung des digitalen Bildes (d. h. die Anzahl der Zeilen und Spalten sowie die Größe der Pixel eine minimale laterale Abmessung eines Strukturelements. Die laterale Abmessung ist hierbei definiert als Abmessung senkrecht zu der Längsrichtung des Strukturelements, d. h. senkrecht zu der Höhe des Strukturelements.

Gemäß einer Ausführungsform wird die zweidimensionale Intensitätsverteilung 150 so gewählt und/oder die Umsetzung der zweidimensionalen Intensitätsverteilung in die Vielzahl von Strukturelementen 106 erfolgt in einer Weise, so dass die Strukturelemente oder, gemäß anderer Ausführungsform die Wandungsendabschnitte 126 der Strukturelemente 106, einen minimalen mittleren Durchmesser nicht unterschreiten. Mit anderen Worten liegt der minimale Durchmesser der Strukturelemente 106 (oder der Wandungsendabschnitte 126 der Strukturelemente 106) in einem Intervall zwischen $dmin \leq D\_WEA \leq dmax$. Beispielsweise beträgt dmin gemäß einer Ausführungsform 0,005 mm. Gemäß einer weiteren Ausführungsform beträgt dmin 0,01 mm oder 0,02 mm. Gemäß einer Ausführungsform beträgt dmax 0,2 mm. Gemäß einer weiteren Ausführungsform beträgt dmax 0,3 mm oder 0,4 mm.

Es sollte angemerkt werden, dass ein Gegenstand oder eine Vorrichtung, wie hierin beschrieben, nicht auf die dezidierten Entitäten beschränkt ist, wie sie in einigen Ausführungsformen beschrieben sind. Vielmehr können die hierin offenbarten Gegenstände auf zahlreichen Weisen implementiert werden, während sie immer noch die offenbarte spezifische Funktionalität liefern.

Gemäß Ausführungsformen der hierin offenbarten Gegenstände kann jede geeignete Entität (z. B. Komponenten, Einheiten und Vorrichtungen) zumindest teilweise in der Form von entsprechenden Computerprogrammen bereitgestellt sein, welche es einer Prozessorvorrichtung ermöglichen, die Funktionalität der entsprechenden Entität zu liefern, wie sie hierin beschrieben ist. Gemäß anderer Ausführungsformen kann jede geeignete Entität, wie sie hierin beschrieben ist, in Hardware bereitgestellt sein. Gemäß anderer, Hybrid-Ausführungsformen können einige Entitäten in Software bereitgestellt sein während andere Entitäten in Hardware bereitgestellt sind.

Es wird darauf hingewiesen, dass jede hierin offenbarte Entität (z. B. Komponenten, Einheiten und Vorrichtungen) nicht auf eine dezidierte Entität beschränkt ist, wie sie in einigen Ausführungsformen beschrieben sind. Vielmehr kann können die hierin beschriebenen Gegenstände auf verschiedene Weisen mit verschiedener Granularität auf Vorrichtungs-Niveau oder auf Softwaremodul-Niveau bereitgestellt sein, während sie immer noch die angegebene Funktionalität liefern. Ferner sollte angemerkt werden, dass gemäß Ausführungsformen eine separate Entität (z. B. ein Softwaremodul, ein Hardwaremodul oder ein Hybridmodul) für jede der hierin offenbarten Funktionen bereitgestellt sein kann. Gemäß anderer Ausführungsformen kann eine Entität (z. B. ein Softwaremodul, in Hardwaremodul oder ein Hybridmodul) konfiguriert sein, um zwei oder mehr Funktionen, wie sie hierin beschrieben sind, zu liefern. Gemäß nochmals anderer Ausführungsformen können zwei oder mehr Entitäten (z. B. Komponenten, Einheiten und Vorrichtungen) konfiguriert sein, um zusammen eine Funktion, wie sie hierin beschrieben ist, zu liefern.

Gemäß einer Ausführungsform enthält die Steuervorrichtung eine Prozessorvorrichtung, welche mindestens einen Prozessor aufweist zum Ausführen von mindestens einem Computerprogramm / Programmelement, welches einem Softwaremodul entsprechen kann.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale verschiedener Ausführungsformen in geeigneter Weise miteinander zu kombinieren, so dass für den Fachmann mit den hier expliziten Ausführungsvarianten eine Vielzahl von verschiedenen Ausführungsformen als offenbart anzusehen sind. Ferner sollte erwähnt werden, dass Begriffe wie "ein" oder "eines" eine Mehrzahl nicht ausschließen. Begriffe wie "enthaltend" oder "aufweisend" schließen weitere Merkmale oder Verfahrensschritte nicht aus. Folglich steht gemäß einer Ausführungsform der Begriff "aufweisend" für "unter anderem aufweisend". Gemäß einer weiteren Ausführungsform steht der Begriff "aufweisend" für "bestehend aus". Gemäß einer Ausführungsform umfasst der Begriff "eingerichtet für" unter anderem die Bedeutung "konfiguriert, um".

Es sollte auch angemerkt werden, dass Bezugszeichen in den Ansprüchen nicht als den Umfang der Ansprüche einschränkend ausgelegt werden sollten. Ferner sollte angemerkt werden, dass Bezugszeichen in der Beschreibung und die Bezugnahme der Beschreibung auf die Zeichnungen nicht als den Umfang der Beschreibung einschränkend ausgelegt werden sollen. Vielmehr veranschaulichen die Zeichnungen nur eine exemplarische Implementierung einer bestimmten Kombination von mehreren Ausführungsformen der hierin offenbarten Gegenstände, wobei jede andere Kombination von Ausführungsformen ebenso möglich und mit dieser Anmeldung als offenbart anzusehen ist.

Zusammenfassend bleibt festzustellen:

Offenbart wird ein Gegenstand aufweisend: einen ersten Oberflächenabschnitt; und einen zweiten Oberflächenabschnitt, welcher benachbart zu dem ersten Oberflächenabschnitt angeordnet ist; wobei der zweite Oberflächenabschnitt eine Vielzahl von Strukturelementen aufweist, wobei die Strukturelemente voneinander verschiedene Konfigurationen aufweisen. Ferner wird ein Verfahren zur Herstellung eines solchen Gegenstands offenbart.

**Patentansprüche**

1. Gegenstand (100, 140) in Form eines Luftreifens oder in Form einer Reifenform, der Gegenstand (100, 140) aufweisend:

    einen ersten Oberflächenabschnitt (102, 202);
    einen zweiten Oberflächenabschnitt (104, 204), welcher benachbart zu dem ersten Oberflächenabschnitt (102, 202) angeordnet ist;
    wobei der zweite Oberflächenabschnitt (104, 204) eine Vielzahl von Strukturelementen (106, 206) aufweist, wobei die Strukturelemente (106, 206) voneinander verschiedene Konfigurationen, insbesondere voneinander verschiedene Abmessungen, aufweisen;
    wobei die voneinander verschiedenen Konfigurationen voneinander verschiedene äußere Konturen der Strukturelemente umfassen; und
    wobei ein Strukturelement in einer Umfangsrichtung eine äußere Kontur aufweist, die unregelmäßig geformt ist.

2. Gegenstand (100, 140) nach Anspruch 1, wobei die voneinander verschiedenen Konfigurationen der Strukturelemente (106, 206) verschiedene Höhen (108) bezüglich des ersten Oberflächenabschnitts (102, 202) umfassen.

3. Gegenstand (100, 140) nach irgendeinem der vorhergehenden Ansprüche, wobei eine Verschiedenheit der äußeren Konturen sich ferner auf den Verlauf der äußeren Kontur in einer Längsrichtung des Strukturelements bezieht.

4. Gegenstand (100, 140) nach irgendeinem der vorhergehenden Ansprüche, wobei die voneinander verschiedenen Konfigurationen voneinander verschiedene mittlere Querschnittsflächeninhalte der Strukturelemente (106, 206) umfassen, wobei der mittlere Querschnittsflächeninhalt über die Höhe (108) des Strukturelements (106, 206) gemittelt ist, insbesondere die Strukturelemente (106, 206) zumindest abschnittsweise jeweils einen im wesentlichen konstanten Querschnittsflächeninhalt aufweisen.

5. Gegenstand (100, 140) nach irgendeinem der vorhergehenden Ansprüche,

wobei jedes Strukturelement (106, 206) eine Stirnfläche (110) aufweist, welche eine mittlere Flächennormale (111) definiert;

und wobei die voneinander verschiedenen Konfigurationen verschiedene Richtungen der mittleren Flächennormalen (111) der Strukturelemente (106, 206) umfassen.

6. Gegenstand (100, 140) nach irgendeinem der vorhergehenden Ansprüche, wobei die Vielzahl von Strukturelementen (106, 206) gemittelt über alle Strukturelemente (106, 206) einen mittleren Durchmesser in einem Bereich zwischen 0,01 mm und 0,2 mm aufweisen und/oder eine mittlere Höhe in einem Bereich zwischen 0,01 mm und 0,4 mm aufweisen.

7. Gegenstand (100, 140) nach irgendeinem der vorhergehenden Ansprüche, wobei der zweite Oberflächenabschnitt (104, 204) eine Markierung bildet, welche einen visuellen Kontrast zu dem ersten Oberflächenabschnitt (102, 202) aufweist.

8. Verfahren zum Herstellen einer Vielzahl von Strukturelementen (106, 206) mit unterschiedlichen Konfigurationen, insbesondere unterschiedlichen Abmessungen, in einem Oberflächenabschnitt (104, 204) eines Gegenstands (100, 140), das Verfahren aufweisend:

Erstellen einer zweidimensionalen Intensitätsverteilung (150), welche Intensitätsbereiche (152) unterschiedlicher Intensität aufweist;
Erzeugen der Strukturelemente (106, 206) in dem Oberflächenabschnitt (104, 204), wobei jeder Intensitätsbereich der zweidimensionalen Intensitätsverteilung (150) einen Strukturbereich (154) eines Strukturelements (106, 206) der Vielzahl von Strukturelementen (106, 206) repräsentiert und die Intensität jedes Intensitätsbereichs eine Höhe (108) des betreffenden Strukturbereichs (154) des Strukturelements (106, 206) definiert;
wobei die voneinander verschiedenen Konfigurationen voneinander verschiedene äußere Konturen der Strukturelemente umfassen; und
wobei ein Strukturelement in einer Umfangsrichtung eine äußere Kontur aufweist, die unregelmäßig geformt ist.

9. Verfahren gemäß Anspruch 8, wobei die Intensitäten der Intensitätsbereiche (152) einem Gauß'schen Rauschen entsprechen.

10. Verfahren gemäß Anspruch 9, wobei die zweidimensionale Intensitätsverteilung (150) erzeugt wird durch:

Erstellen eines Bildes (158) mit einer konstanten Färbung, beispielsweise schwarz;
Addieren von Gauß'schem Rauschen (160) zu dem Bild (158), wodurch ein modifiziertes Bild erhalten wird, und wobei das modifizierte Bild die zweidimensionale Intensitätsverteilung (150) repräsentiert.

11. Verfahren nach einem der Ansprüche 8 bis 10, wobei das Erzeugen der Strukturelemente (106, 206) ein Abtragen des Gegenstands (100, 140) im Bereich des Oberflächenabschnitts (104, 204) umfasst und wobei für jeden Strukturbereich (154) der Abtrag die Höhe (108) des Strukturbereichs (154) definiert.

12. Verfahren nach Anspruch 11, wobei das Abtragen durch Laserbearbeitung durchgeführt wird.

13. Verfahren nach Anspruch 12, wobei für die Laserbearbeitung eine Laserquelle (130) mit einer Wellenlänge im Bereich zwischen 800 nm und 1200 nm, insbesondere mit einer Wellenlänge von 1064 nm verwendet wird.

14. Verfahren nach irgendeinem der Ansprüche 12 oder 13, wobei mindestens für einen Teil der Strukturbereiche (154) das Abtragen durch eine Mehrzahl von Laserpulsen an einer Stelle durchgeführt wird, insbesondere durch eine Anzahl zwischen 2 und 5000 Laserpulsen.

15. Verfahren nach irgendeinem der Ansprüche 8 bis 14, wobei die zweidimensionale Intensitätsverteilung (150) durch eine Anordnung von Pixeln in Reihen und Spalten definiert wird, wobei jedem Pixel ein Intensitätswert zugeordnet ist und wobei jeder Intensitätsbereich (152) der zweidimensionalen Intensitätsverteilung (150) mindestens eines der Pixel umfasst.

**Claims**

1. Object (100, 140) in the form of a pneumatic tire or in the form of a tire mold, the object (100, 140) comprising

a first surface portion (102, 202);
a second surface portion (104, 204) located adjacent to the first surface portion (102, 202);
wherein the second surface portion (104, 204) comprises a plurality of structure elements (106, 206),
wherein the structure elements (106, 206) have configurations different from each other, in particular dimensions different from each other;
where the different configurations include different outer contours of the structure elements; and
wherein a structure element in a circumferential direction has an outer contour which is irregularly shaped.

2. Object (100, 140) according to claim 1, wherein the different configurations of the structure elements (106, 206) comprise different heights (108) with respect to the first surface portion (102, 202).

3. Object (100, 140) according to any of the preceding claims,
where a difference in the outer contours also refers to the course of the outer contour in a longitudinal direction of the structure element.

4. Object (100, 140) according to any of the preceding claims, wherein the configurations different from each other comprise average cross-sectional areas of the structure elements (106, 206) which are different from each other, wherein the average cross-sectional area is averaged over the height (108) of the structure element (106, 206), in particular the structure elements (106, 206) each have a substantially constant cross-sectional area at least in portions.

5. Object (100, 140) according to any of the preceding claims,
wherein each structure element (106, 206) has an end face (110) defining a mean surface normal (111); and wherein the configurations different from each other comprise different directions of the mean surface normals (111) of the structure elements (106, 206).

6. Object (100, 140) according to any of the foregoing claims, wherein the plurality of structure elements (106, 206) averaged over all structure elements (106, 206) have an average diameter in a range between 0.01 mm and 0.2 mm and/or have an average height in a range between 0.01 mm and 0.4 mm.

7. Object (100, 140) according to any of the foregoing claims, the second surface portion (104, 204) forming a marking which has a visual contrast to the first surface portion (102, 202).

8. Method for producing a plurality of structure elements (106, 206) with different configurations, in particular different dimensions, in a surface portion (104, 204) of an object (100, 140), the method comprising:

    generating a two-dimensional intensity distribution (150), which has intensity regions (152) of different intensity;
    generating the structure elements (106, 206) in the surface portion (104, 204), wherein each intensity region of the two-dimensional intensity distribution (150) represents a structural region (154) of a structure element (106, 206) of the plurality of structure elements (106, 206), and the intensity of each intensity region defines a height (108) of the respective structural region (154) of the structure element (106, 206);
where the different configurations include different outer contours of the structure elements; and wherein a structure element in a circumferential direction has an outer contour which is irregularly shaped.

9. Method according to claim 8, wherein the intensities of the intensity regions (152) correspond to a Gaussian noise.

10. Method according to claim 9, wherein the two-dimensional intensity distribution (150) is generated by:

    creating an image (158) with a constant coloration, for example black;
    adding Gaussian noise (160) to the image (158), thereby obtaining a modified image, and wherein the modified image represents the two-dimensional intensity distribution (150).

11. Method according to one of claims 8 to 10, wherein the generation of the structure elements (106, 206) comprises an ablation of the object (100, 140) in the region of the surface portion (104, 204) and wherein for each structural region (154) the ablation defines the height (108) of the structural region (154).

12. Method according to claim 11, wherein the ablation is performed by laser processing.

13. Method according to claim 12, wherein a laser source (130) with a wavelength in the range between 800 nm and 1200 nm, in particular with a wavelength of 1064 nm, is used for the laser processing.

14. Method according to any one of claims 12 or 13, wherein for at least part of the structural regions (154) the ablation is performed by a plurality of laser pulses at a location, in particular by a number between 2 and 5000 laser pulses.

15. Method according to any one of claims 8 to 14, wherein the two-dimensional intensity distribution (150) is defined by an arrangement of pixels in rows and columns, wherein an intensity value is assigned to each pixel, and wherein each intensity region (152) of the two-dimensional intensity distribution (150) comprises at least one of the pixels.

**Revendications**

1. Article (100, 140) sous la forme d'un pneumatique ou sous la forme d'un moule de pneumatique, l'article (100, 140) comprenant :

une première partie de surface (102, 202) ;
une deuxième partie de surface (104, 204) disposée de façon adjacente à la première partie de surface (102, 202) ;
la deuxième partie de surface (104, 204) comprenant une pluralité d'éléments structurels (106, 206), les éléments structurels (106, 206) ayant des configurations différentes les unes des autres, en particulier des dimensions différentes les unes des autres ;
les configurations différentes les unes des autres comprenant des contours extérieurs des éléments structurels qui sont différents les uns des autres ; et
un élément structurel ayant un contour extérieur dans une direction circonférentielle qui est de forme irrégulière.

2. Article (100, 140) selon la revendication 1, dans lequel les configurations des éléments structurels (106, 206) qui sont différentes les unes des autres comprennent des hauteurs différentes (108) par rapport à la première partie de surface (102, 202).

3. Article (100, 140) selon l'une quelconque des revendications précédentes, dans lequel une différence des contours extérieurs concerne en outre le tracé du contour extérieur dans une direction longitudinale de l'élément structurel.

4. Article (100, 140) selon l'une quelconque des revendications précédentes, les configurations différentes les unes des autres comprennent des surfaces en section transversale moyennes des éléments structurels (106, 206) qui sont différentes, la surface moyenne de section transversale étant calculée en moyenne sur la hauteur (108) de l'élément structurel (106, 206), en particulier les éléments structurels (106, 206) ayant chacun, au moins par sections, une surface en section transversale sensiblement constante.

5. Article (100, 140) selon l'une quelconque des revendications précédentes, dans lequel chaque élément structurel (106, 206) a une face d'extrémité (110) qui définit une normale de surface moyenne (111) ; et dans lequel les configurations différentes les unes des autres comprennent des directions différentes des normales de surface moyennes (111) des éléments structurels (106, 206).

6. Article (100, 140) selon l'une quelconque des revendications précédentes, dans lequel les éléments de la pluralité d'éléments structurels (106, 206) ont, en moyenne sur tous les éléments structurels (106, 206), un diamètre moyen compris entre 0,01 mm et 0,2 mm et/ou une hauteur moyenne comprise entre 0,01 mm et 0,4 mm.

7. Article (100, 140) selon l'une quelconque des revendications précédentes, dans lequel la deuxième partie de surface (104, 204) forme une marque qui présente un contraste visuel avec la première partie de surface (102, 202).

8. Procédé pour produire une pluralité d'éléments structurels (106, 206) avec des configurations différentes, en particulier des dimensions différentes, dans une partie de surface (104, 204) d'un article (100, 140), le procédé comprenant :

le fait de créer une distribution d'intensité bidimensionnelle (150) comprenant des zones d'intensité (152) ayant des intensités différentes ;
le fait de générer des éléments structurels (106, 206) dans la partie de surface (104, 204), chaque zone d'intensité de la distribution d'intensité bidimensionnelle (150) représentant une zone structurelle (154) d'un élément structurel (106, 206) de la pluralité d'éléments structurels (106, 206), et l'intensité de chaque zone d'intensité définissant une hauteur (108) de la zone structurelle respective (154) de l'élément structurel (106, 206) ;
les configurations différentes les unes des autres comprenant des contours extérieurs des éléments structurels qui sont différents les uns des autres ; et
un élément structurel ayant un contour extérieur dans une direction circonférentielle qui est de forme irrégulière.

9. Procédé selon la revendication 8, dans lequel les intensités des zones d'intensité (152) correspondent à un bruit gaussien.

10. Procédé selon la revendication 9, dans lequel la distribution d'intensité bidimensionnelle (150) est générée par :

le fait de produire une image (158) avec une coloration constante, par exemple le noir ;
le fait d'ajouter un bruit gaussien (160) à l'image (158), ce qui permet d'obtenir une image modifiée, l'image modifiée représentant la distribution d'intensité bidimensionnelle (150).

11. Procédé selon l'une des revendications 8 à 10, dans lequel la génération des éléments structurels (106, 206) comprend une ablation de l'article (100, 140) dans la zone de la partie de surface (104, 204) et dans lequel pour chaque zone structurelle (154) l'ablation définit la hauteur (108) de la zone structurelle (154).

**12.** Procédé selon la revendication 11, dans lequel l'ablation est effectuée par usinage au laser.

**13.** Procédé selon la revendication 12, dans lequel une source laser (130) avec une longueur d'onde comprise entre 800 nm et 1200 nm, en particulier avec une longueur d'onde de 1064 nm, est utilisée pour l'usinage au laser.

**14.** Procédé selon l'une quelconque des revendications 12 ou 13, dans lequel, au moins pour une partie des zones structurelles (154), l'ablation est effectuée par une pluralité d'impulsions laser en un point, en particulier par un nombre d'impulsions laser compris entre 2 et 5000.

**15.** Procédé selon l'une quelconque des revendications 8 à 14, dans lequel la distribution d'intensité bidimensionnelle (150) est définie par un agencement de pixels en lignes et en colonnes, dans lequel une valeur d'intensité est attribuée à chaque pixel, et dans lequel chaque zone d'intensité (152) de la distribution d'intensité bidimensionnelle (150) comprend au moins un des pixels.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160137008 A1
- US 5303758 A
- WO 2015058874 A1